# EUROPEAN PATENT APPLICATION

(11) **EP 1 132 632 A2**
(43) Date of publication of application: **12.09.2001**
(21) Application number: 01100816.6
(22) Date of filing: 15.01.2001
(51) Int. Cl.: F16C 13/00, F16C 33/58

(54) **Roller with ball bearing**

(30) Priority: 10.03.2000 IT MI200488
(71) Applicant: CPM S.p.A., 20121 Milano (IT)
(72) Inventor: Ravinale, Stefano, 20099 Sesto San Giovanni (MI) (IT)
(74) Representative: Kratter, Carlo, Dr. Ing.

(57) **Abstract**

A ball roller, in particular for lift trucks, of the type comprising two rings (1, 2), namely a fixed inner ring (2) rigidly secured to a support element (10), and an outer ring (1) rotatable coaxially to the first, the opposing surfaces of said rings (1, 2) each presenting at least one rolling track (1A, 2A) arranged to delimit an annular space (4) for the movement of the balls (3), said balls (3) being in such a number as to substantially entirely occupy said annular space (4), in which the fixed ring (2) comprises a hole (5) passing through the annular rolling track (2A) and a wall (28) of said holed ring, said wall (28) being in contact with the support element (10), said hole (5) enabling the balls (3) to be inserted into the annular space (4), the closure element (6) for said hole (5) being associated with the holed ring (2) in such a manner as to be able to rotate within said hole (5), it being inserted with clearance into said hole (5).

## Description

The present invention relates to a rolling-contact bearing and a ball roller for lift trucks in accordance with the precharacterising part of the independent claims, and a method for their connection to a support element.

In the present context a ball roller means a particular radial type of rolling-contact ball bearing, in which the inner ring is fixed and secured to a support pin, whereas the outer ring is free to rotate. In these rollers the outer ring has a strengthened structure to "rotate" on a flat or curved surface and withstand radial loads in the manner in which a wheel supports them. The outer ring, acting as a "wheel", rotates on balls. Rollers of the present definition cover a range of standard dimensions not exceeding 130 mm. in outer diameter, and are approved for use in the lift truck sector.

It is known to insert the balls between the tracks of the two rings of a radial rolling-contact ball bearing through a hole provided radially in the inner ring or in the outer ring (if considering generic bearings}, in order to fill the entire available space with balls to maximise load supporting capacity. After inserting the rolling bodies, this hole is closed by a plug rigidly secured to the holed ring in a predetermined position by means of a pin.

Known (conventional) plugs have until now always been constructed of hardened steel. The expert of the art does not consider it possible either to construct such plugs of a material other than steel, or to avoid securing them rigidly to the holed ring, because it is considered that only the known solution enables sufficient continuity of the supporting track to be achieved in the region in which the ball insertion hole has been formed.

Inserting the ball between the tracks of a radial rolling-contact bearing in the aforedescribed manner considerably complicates the operations involved in constructing the rolling-contact bearing. In this respect, before assembling the bearing, the closure element (plug) must be rigidly secured to the holed ring by a pin; the ring together with the closure element must then be machined to prevent the closure element projecting from the seat for the rolling bodies and from the surface of contact with the support element for the holed ring. After this machining the plug is removed from the ring, the rolling bodies are inserted between the tracks, and the plug is finally again inserted and secured with extreme precision to the holed ring.

The known filling method considerably influences the production time and cost of those radial ball bearings which adopt it, and is generally usable for bearings of greater dimensions than those of the ball rollers usually used in the vertical lifting guides of lift trucks.

For those bearings with a roller function the method of inserting the balls through a hole in the outer ring is not available.

For those known ball rollers for lift trucks which are conventional in terms both of approved dimensions and of the thickness of the inner ring, which is relatively thin in a radial direction, it is not possible to use the solution comprising a ball insertion hole plus the relative plug, i.e. the method involving complete filling of the space between the two rings. In fact, until now the outer ring has been made as robust as possible, with the greatest possible radial thickness, in order to increase the roller loading capacity, while maintaining standard overall roller dimensions, resulting in a reduction in the thickness of the inner ring, with consequent impossibility of using the known solution for rolling-contact bearings, of providing a ball insertion hole closed by a pinned plug. In fact, in known rollers the thickness of the inner ring is such that in order to form the hole for inserting the pin, machining of extreme precision would be necessary, excessively influencing the time and cost of roller production. Known ball rollers are therefore characterised by a number of balls limited by the radiality of the bearing, which consequently requires a retainer for maintaining the balls equidistant. Hence, because of the presence of the spacing retainer, about 40-50% of the space between the two rings in known rollers is not occupied by balls. Hence until now the expert of the art has excluded the method of totally filling the space between the two rings in a roller to increase their loading capacity, neither is it thinkable to use the outer ring to achieve this purpose, as it represents a rotary element.

An object of the present invention is to provide a rolling-contact ball bearing or a roller in which the aforesaid drawbacks are overcome and, in particular, in which the operations necessary for loading the rolling bodies are simplified and accelerated, and which is able to withstand greater loads than conventional rollers.

This and further objects which will be apparent to an expert of the art are obtained by a rolling-contact bearing or ball roller in accordance with the accompanying claims.

The present invention will be better understood from the accompanying drawings, which are provided by way of non-limiting example and in which:
Figure 1 is a schematic front view of a roller according to the invention;
Figures 2 and 3 are sections taken on the lines 2/2 of Figure 1 and 3/3 of Figure 2;
Figures 4, 5, 6A, 6B are schematic views from above and in section respectively, of components and parts of the ball roller;
Figures 7 and 8 are schematic front views, partly sectioned respectively on the line 7/7 of Figure 8 and on the line 8/8 of Figure 7, of a modification to the roller shown in Figures 1-6; Figures 9 and 10 are schematic partial front views of a roller of the invention, connected to a support element and subjected to two types of load;
Figures 11, 11A, 11B are a schematic plan view of a non-standard rolling-contact bearing according to the invention, and of two of its parts shown in section;
Figures 12, 12A are a schematic plan view of a second embodiment of a rolling-contact bearing, and of a part thereof shown in section.

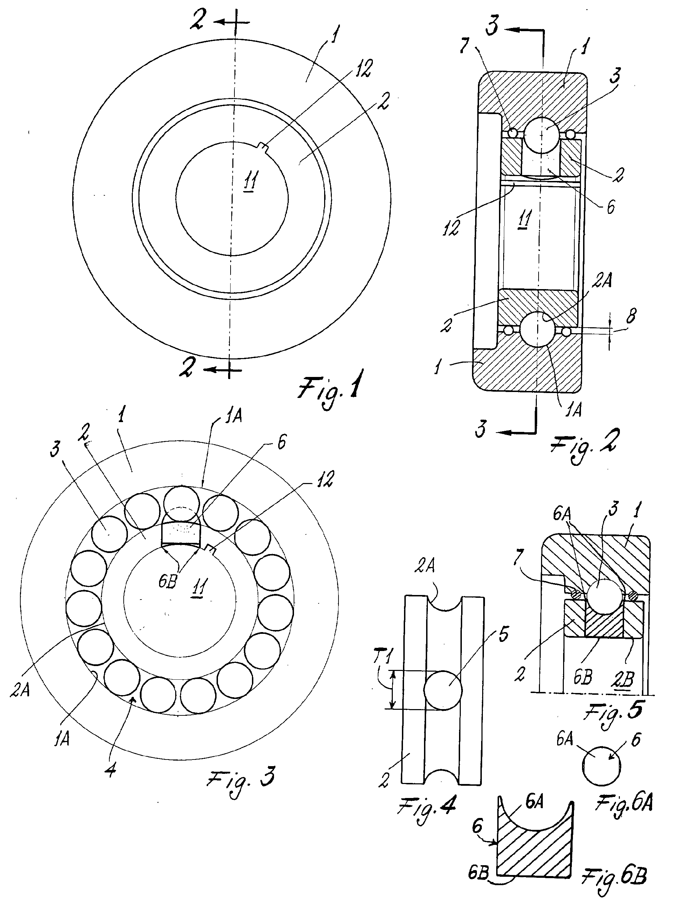

With reference to Figures 1-10 a roller according to the invention comprises an outer ring 1, and an inner ring 2 coaxial to the first, the opposing surfaces of the two rings each comprising an annular seat 1A, 2A functioning as a rolling track delimiting a toric annular space 4 in which the rolling bodies 3, which in the represented example are of ball type, roll. The rolling bodies 3 completely fill the space 4 between the two tracks and are inserted between the two tracks through a radial hole 5 (Figure 4) in the inner ring 4, when the inner and outer rings are disposed one inside the other. After the space 4 has been completely filled with the balls 3, the hole 5 is closed by an element 6.
The space 8 (Figure 2) between one ring and the other, lateral to the space 4, is advantageously closed by a circular gasket 7.

The rings 1, 2 and the rolling bodies are substantially of conventional type and will therefore not be described in detail.

It should be noted that because the balls 3 are inserted into the space 4 through the hole 5, the space 8 (Figure 2) between one ring and the other in a roller according to the invention can be reduced to just a few tenths of a millimetre, so eliminating the circular gaskets 7.

The closure element 6 has a substantially cylindrical body and presents at that end 6A in contact with the balls 3 a recessed shape having a curvature equal to that of the seat or track 2A, so that when the closure element 6 has been inserted into the hole 5, that end 6A is adequately flush with the track 2A. The other end 6B of the closure element 6 has instead a cylindrical curvature greater than that of the inner wall 2B (Figure 5) of the ring 2. That end 6B can also be flat. The closure element is dimensioned such that when its end 6A is flush with the track 2A of the inner ring 2, the other end 6B is flush with the cylindrical inner surface delimiting the cylindrical aperture 11 in the ring 2, and into it there can be inserted without interference the support element 10 (Figures 9, 10), to which the inner ring 2 is secured. Because of its particular form, the closure element 6 is inserted into the hole 5 without being forced therein or being secured by pins or other members for securing it to the ring 2, and is retained in the hole by the action of the balls 3, which completely fill the space 4, and of the support element 10 secured to the inner ring 2.

The closure element 6 is advantageously formed by moulding a plastic material, for example a polyamide or acetal resin or a suitable composite material, or from another material with similar characteristics, such as brass or aluminium.

The particular shape of the ends 6A, 6B of the closure element 6 is achieved without the need to secure this element to the inner annular element.

The roller of the invention is rigidly secured to the support element 10, for example a pin engaging the inner ring 2, such that the radial loads F, F1, F2 acting on the roller are not transmitted onto the closure element 6, said loads being substantially supported by that part of the rings 1 and 2 not comprising the hole 5 and by those balls 3 not in contact with the closure element 6. To secure the inner ring 2 and the pin 10 together, a groove 12 is provided in the aperture 11 delimited by the inner ring 2. On the outer surface of that portion of the pin 10 which is inserted into the inner ring 2 there is provided a preferably elastic peg such that the inner ring 2 is positioned on the pin 10 by the engagement in the grooves 12 of those few millimetres of said elastic peg 13 which project. After the peg 13 has engaged the groove 12, the ball roller is laterally confined for example by a snap ring or the usual systems in use.

By means of the groove 12 it is always possible to easily and rapidly secure the inner ring 2 correctly to the pin 10, by positioning the ring 2 such that the load F (Figures 10, 19) which acts on the roller is in a position opposite the closure element if the load F is orientated in a single direction (Figure 10). If the load F1, F2 is orientated in two opposite directions (Figure 9) the closure element is instead positioned normal to the line of action of said two forces.

By virtue of the particular positioning of the closure element 6, the roller of the invention can withstand even axial loads without any difficulty, because under axial load the balls 3 are without load at the moment in which they come into contact with said element 6, it being the other balls of the roller which support the axial load.

It should also be noted that the groove 12 provided in the inner ring 2 can also facilitate the positioning of this ring on the pin. In this respect, this groove, visible from the outside even when the pin 10 is inserted in the ring 2, clearly indicates where the closure element 6 is positioned.

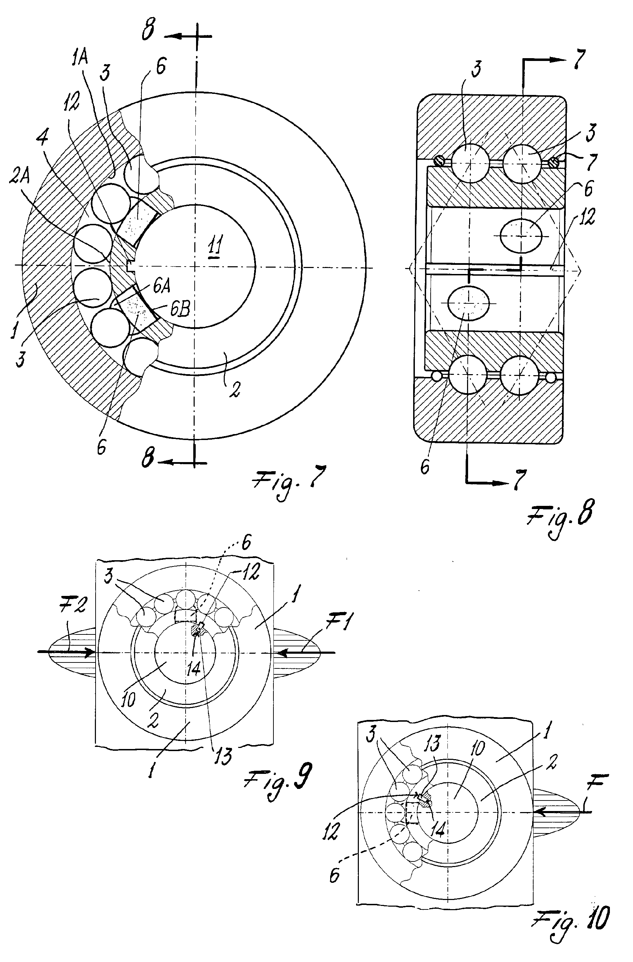

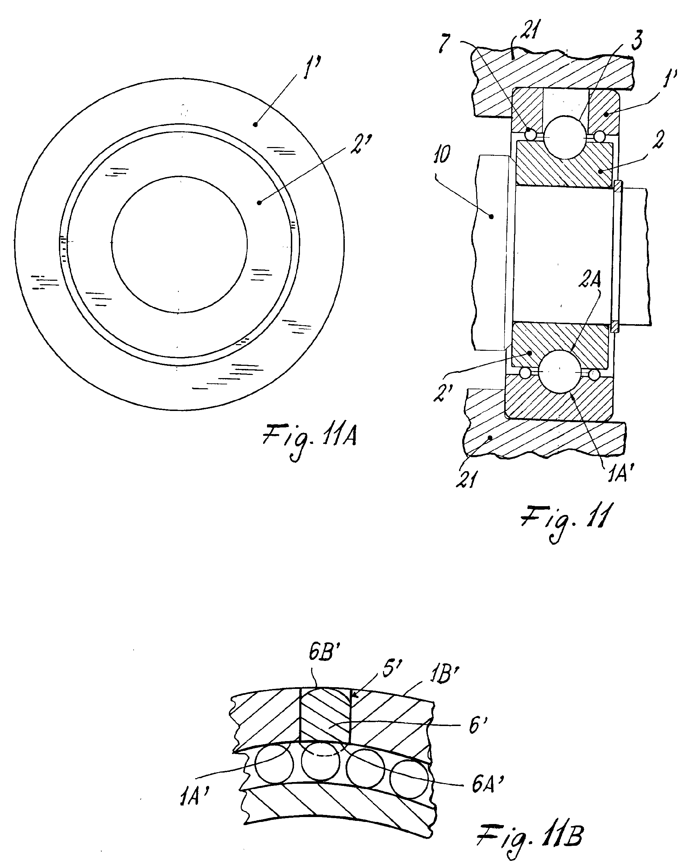

Figures 7, 8 show a first modification to the already described roller; this modification is substantially equal to the preceding solution but comprises two rolling tracks and consequently two holes for loading the balls and two closure elements (all those components in common which the preceding embodiment are indicated by the same numerals).

That already described with reference to rollers can also be applied without substantial modification to radial rolling-contact ball bearings of analogous geometry. In fact, the roller of Figures 1-10 can also be used as a radial rolling-contact bearing by taking account of the load arising during operation. In the bearings of the invention the ball insertion hole can be provided either in the inner ring, as shown in Figures 1-10, or in the outer ring, as shown in Figures 11, 11A, 11B. These figures show a rolling-contact bearing in which the outer ring 1' is rigidly inserted into a housing 21, and the inner ring 2' rotates on balls 3 which completely fill the space between the two rings.

For the insertion of said balls the outer ring comprises a radial hole 5' closed by a plug 6' of the already described type. The plug is free to rotate so that it can correctly orientate itself during passage of the balls. The plug cannot however move axially. In the plug 6', that end 6A which comes into contact with the rolling bodies has a recessed shape equal or similar to that of the rolling track 1A' of the holed ring whereas the other end 6B' of the closure element 6' has a convex curvature of radius less than the radius of that wall 1B' of the holed ring 1' in contact with the seat of the housing 21. The closure element 6' is dimensioned such that when it has been inserted in the hole 5' the ends (6A' and 6B') are flush with the rolling track 1A' and the wall 1B', so that the track 1A' is free of substantial discontinuities.

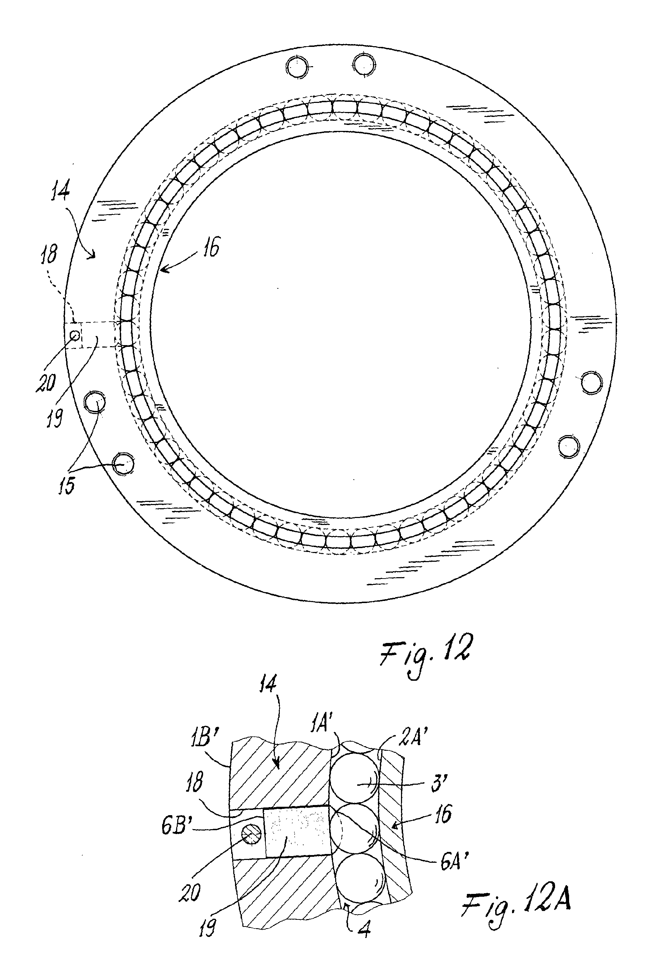

With reference to the further embodiment shown in Figures 12, 12A, these show a rolling contact bearing in which the outer ring 14 is to be rigidly secured to a support element (not shown), for example by bolts engaging in threaded holes 15, and the inner ring 16 rotates on balls 17 which completely fill the space between the two rings. For the insertion of said balls the outer ring comprises a radial hole 18 closed by a plug 19 of the already described type. The plug is free to rotate so that it can correctly orientate itself during passage of the balls. The plug cannot however move axially, and for this purpose there is provided in the outer ring a lateral through hole into which a pin 20 is inserted. The pin 20 also indicates the position of the plug 19 and enables the outer element 1 to be rigidly secured to the support element.

Finally, it should be noted that the aforedescribed embodiments are provided merely by way of example, and that numerous modifications can be made thereto all falling within the same inventive concept, for example the means for securing the fixed ring of the roller to the relative support element could be different from those described but conventional for the expert of the art. In particular, in addition to these securing means, the ring presenting the ball insertion hole could comprise a reference element, visible from the outside even when the relative support element is associated with said ring. This reference element can for example be a notch provided along the outer faces of the ring, to indicate the exact position of said hole and said closure element.

Furthermore, the ring presenting the hole into which the closure plug is inserted could also be rotatable; according to the invention, it is in fact necessary for the plug to be able to rotate within the hole in which it is housed and be locked to prevent axial movements which could cause it to escape from the ring into which it is inserted. Consequently, with reference for example to the bearing of Figures 11, 11A, 11B, the outer ring 1' could also rotate.

## Claims

1. A ball roller, in particular for lift trucks, of the type comprising two rings (1, 2), namely a fixed inner ring (2) rigidly secured to a support element (10), and an outer ring (1) rotatable coaxially to the first, the opposing surfaces of said rings (1, 2) each presenting at least one rolling track (1A, 2A) arranged to delimit an annular space (4) for the movement of the balls (3), said balls (3) being in such a number as to substantially entirely occupy said annular space (4), **characterised in that** the fixed ring (2) comprises a hole (5) passing through the annular rolling track (2A) and through a wall (2B) of said holed ring, said wall (28) being in contact with the support element (10), said hole (5) enabling the balls (3) to be inserted into the annular space (4), the closure element (6) for said hole (5) being associated with the holed ring (2) in such a manner as to be able to rotate within said hole (5), it being inserted with clearance into said hole (5).

2. A roller as claimed in claim 1, **characterised in that** the closure element (6) comprises an end portion (6A) which appears in said track (2A) and is arranged to come into contact with the balls and be orientated by said balls in such a manner as to facilitate their passage, said portion presenting a curvature similar or equal to that of the track (2A) of the fixed ring (2), so as to close said hole (5) without said track (2A) presenting substantial discontinuities at said hole (5).

3. A roller as claimed in claim 1, characterised by comprising means (12, 13) to position the fixed ring (2) in a position relative to the support element (10) such as to prevent radial loads (F1, F2) exerted on the rotatable ring (1) from being transmitted onto the closure element (6), said loads being supported substantially by that part of the rings (1, 2) not comprising said hole (5) for the balls (3) which is not in contact with said closure element (6).

4. A roller as claimed in claim 1, **characterised in that** the closure element (6) is constructed of a plastic material.

5. A roller as claimed in claim 4, **characterised in that** the plastic material is polyamide or acetal resin or a similar material.

6. A roller as claimed in claim 3, **characterised in that** the means for positioning the fixed ring (2) relative to the support element (10) comprise a reference element (12) visible from the outside even when it is associated with the support element, and arranged to indicate the position of the closure element (6) in said fixed ring (2).

7. A roller as claimed in claim 6, **characterised in that** the reference element (12) is provided on at least one of the lateral faces of the fixed ring (2).

8. A roller as claimed in claim 6, **characterised in that** the reference element is a groove (12) provided in the fixed ring (2), in proximity to the hole (5) for inserting the closure element (6), said groove transversely traversing the entire ring (2) and being open in that wall (2B) of said fixed ring (2) in contact with the support element (10).

9. A roller as claimed in claim 8, **characterised in that** the means for positioning the fixed ring (2) relative to the support element (10) comprise a connection element (13) rigidly associated with the support element (10), in order to be positioned in the reference groove (1) in the fixed ring (2).

10. A roller as claimed in claim 2, **characterised in that** that end (6A) of the closure element (6) which comes into contact with the balls (3) is of recessed shape, having a curvature equal or similar to that of the seat (2A) in the fixed ring (2); the other end (6B) of the closure element (6) being flat or having a concave cylindrical curvature of radius greater than that of that wall (2B) of the holed ring (2) in contact with a support element (10); the closure element (6) being dimensioned such that, when inserted into said hole (5), said ends (6A, 6B) are flush and the seat (2A) is without substantial discontinuities.

11. A roller as claimed in one of the preceding claims, characterised by comprising a plurality of rolling tracks (4) and, for each of said tracks (4), a separate hole (5) and closure element (6).

12. A method for connecting a roller claimed in one of claims from 1 to 11 to a support element (10); characterised by securing the holed ring (2) of the roller to the support element (10) in such a manner that the hole (5) for inserting the balls (3) into the rolling track (4), and the closure element (6) provided in said hole (5), are situated in a position such as to prevent radial loads (F1, F2; F) exerted on the rotatable ring (1) from being transmitted onto said closure element (6), said loads being supported substantially by that part of the roller not comprising said hole (5) and balls (3) which is not in contact with said closure element (6).

13. A method as claimed in claim 12, characterised by associating the closure element (6) with the hole (5) of the holed ring (2) while leaving it free to at rotate at least partially within said hole, but without rigidly securing said element (6) to said ring (2).

14. A method as claimed in claim 12, **characterised in that** if only one radial load (F) acts on the roller, the holed ring (2) is connected to the support element (10) such that the closure element (6) is in an opposite position to that in which said load acts.

15. A method as claimed in claim 12, **characterised in that** if two opposing radial loads (F1, F2) act on the roller, the holed ring (2) is connected to the support element (10) such that the closure element (6) is equidistant from the lines of action of said loads.

16. A rigid rolling contact ball bearing of the type comprising two coaxial rings (1', 2', 14, 16), the opposing surfaces of said rings (1, 2) each presenting at least one rolling track (1A', 2A') arranged to delimit an annular space (4') for the movement of balls (3'), said balls (3') being in such a number as to substantially entirely occupy said annular space (4'), one of said rings (1', 14) comprising a hole (5', 18) passing through the annular rolling track (1A') and through another wall (1B') of said holed ring, said hole (5', 18) enabling the balls (3') to be inserted into the annular space (4'), an element (6', 19) for closing said hole (5', 18) being provided; **characterised in that** the closure element (6', 19) is associated with the holed ring (1', 14) in such a manner as to be able to rotate at least partially within said hole (5', 18), it being inserted with clearance into said hole.

17. A bearing as claimed in claim 16, **characterised in that** the holed ring (1', 14) is fixed and rigidly secured to a support element (21).

18. A bearing as claimed in one of the preceding claims, **characterised in that** the closure element (6', 19) comprises an end portion (6A') which appears in the rolling track (1A') and is arranged to come into contact with the balls (31) and be orientated by said balls in such a manner as to facilitate their passage, said portion presenting a curvature similar or equal to that of said track of the holed ring (1', 14), so as to close the hole (5', 18) without said track presenting substantial discontinuities at said hole.

19. A bearing as claimed in claim 16, **characterised in that** the closure element (6', 19) is constructed of a plastic material.

20. A bearing as claimed in claim 19, **characterised in that** the plastic material is polyamide or acetal resin or a similar material.

21. A bearing as claimed in claim 16, **characterised in that** that end (6A') of the closure element (6') which comes into contact with the rolling bodies (3') is of recessed shape, having a curvature equal or similar to that of the track (1A') of the holed ring (1'); the other end (6B') of the closure element being flat or having a cylindrical curvature of radius greater than that of that wall (1B') of the holed ring (1') in contact with a support element (21); the closure element (6') being dimensioned such that, when inserted into the relative hole (5'), said ends (6A', 6B') are flush with said seat (1A') and said wall (1B') such that said seat (1A') is without substantial discontinuities.

22. A bearing as claimed in one of the preceding claims, **characterised in that** the holed ring (1', 14) is the outer ring.

23. A bearing as claimed in claim 16, **characterised in that** the hole (5', 18) for the closure element (6', 19) is provided in the outer ring (1', 14) and is radial to said ring.

24. A bearing as claimed in one of the preceding claims, characterised by comprising a plurality of rolling tracks and, for each of said tracks, a separate hole and a closure element (6').

25. A bearing as claimed in one of the preceding claims, characterised by comprising means (20) for maintaining the closure element (19) in a predetermined radial position.

26. A bearing as claimed in claim 25, **characterised in that** the means for positioning the closure element (19) comprise a locking element (20) arranged to interfere with that end (6B') of the closure element distant from that (6A') which comes into contact with the balls (3').

27. A bearing as claimed in claim 26, **characterised in that** the locking element is a pin (20) passing through a hole provided in the holed ring (14).
